# EUROPEAN PATENT APPLICATION

(11) **EP 1 746 734 A2**
(43) Date of publication of application: **24.01.2007**
(21) Application number: 06117517.0
(22) Date of filing: 19.07.2006
(51) Int. Cl.: H04B 1/16

(54) **Portable device and method of controlling a portable device**

(30) Priority: 22.07.2005 KR 2005066843
(71) Applicant: Samsung Electronics Co., Ltd., Yeongtong-gu Suwon-city, Gyeonggi-do 442-742 (KR)
(72) Inventor: Park, Seong-geun, Yongin-si (KR)
(74) Representative: Walaski, Jan Filip

(57) **Abstract**

A portable device comprising a digital broadcast reception module having a digital broadcast receiving part and a digital broadcast processor to process digital broadcast signals received through the digital broadcast receiving part and a power supply to supply power to drive the digital broadcast receiving part and the digital broadcast processor. A controller controls a mode of power supplied to the receiving part and the processing part according to an initialization routine of the portable device, according to whether an adaptor is supplying the drive power, and according to a user input. The user may set the initialization routine according to whether the user normally desires to use the broadcast receiving part and may vary the power mode using an input window of the portable device, to conserve power according to whether the drive power is being operated from an adaptor or from a battery.

## Description

The present invention relate to a portable device and a control method thereof, and more particularly, to a portable device which comprises a digital broadcast reception module and adjusts power consumption according to whether the digital broadcast reception module is used, and a control method thereof.

Conventional analog radio broadcasting has advanced to digital radio broadcasting. Digital multimedia broadcasting (DMB), which transmits data and provides a multimedia service, is now available along with conventional audio radio broadcasts. Digital multimedia broadcasting provides high transmission efficiency and various multimedia services and rarely generates noise in transmission channels or distorts signals.

Accordingly, a digital broadcast reception module is installed in a mobile phone or a portable computer such as a notebook computer or a personal digital assistant (PDA) to receive digital multimedia broadcast signals even while the mobile phone or the portable computer is being carried.

A battery is required to use the digital multimedia broadcast service while the portable computer or the mobile phone (hereinafter, to be referred to as portable computer or portable device) is being carried. Further, power consumption by the digital broadcast reception module should be considered when the portable device is designed as power saving is a major factor in portable devices.

Reduction of power consumed by the digital broadcast reception module according to an operation state thereof would be an advantage when using the portable device which has the digital broadcast reception module therein.

Accordingly, an aspect of the present invention is to provide a portable device which adjusts power consumption according to whether a digital broadcast reception module is used, and a control method thereof.

The foregoing and/or other aspects of the present invention are also achieved by providing a portable computer, comprising a digital broadcasting reception module having a digital broadcasting receiving part to receive digital broadcasting signals and a digital broadcasting processor to process the digital broadcasting signals received through the digital broadcasting receiving part; a power supply to supply power to drive the digital broadcasting receiving part and the digital broadcasting processor; and a system to control the digital broadcasting signal reception module to operate in one of a first power mode in which power supplied from the power supply to the digital broadcasting receiving part and the digital broadcasting signal processor is cut off, a second power mode in which power supplied from the power supply to the digital broadcasting receiving part is cut off, and a third power mode in which power is supplied from the power supply to the digital broadcasting receiving part and the digital broadcasting processor.

According to an aspect of the present invention, the system comprises a power switch which switches power supplied from the power supply to the digital broadcasting receiving part and/or the digital broadcasting processor, and a power manager which controls the power switch to make the digital broadcasting reception module operate in one of the first power mode, the second power mode and the third power mode.

According to an aspect of the present invention, the power manager comprises an initializing routine performer which performs an initial routine to the portable computer and sets whether the digital broadcasting reception module operates in the first power mode while the initial routine is performed.

According to an aspect of the present invention, the power supply receives power from a battery or an adaptor and supplies power to drive the digital broadcasting reception module, and the power manager comprises a power controller which controls the power switch to convert the mode of the digital broadcasting reception module from the first power mode to the second power mode if detected that the power supply receives power from the adaptor.

According to an aspect of the present invention, the portable computer further comprises a mode selection part which selects whether the mode of the digital broadcasting reception module is converted into the third power mode, and the power controller controls the power switch to make the digital broadcasting reception module convert its mode from the second power mode to the third power mode if the conversion to the third power mode is selected through the mode selection part.

According to an aspect of the present invention, the portable computer further comprises a display part to display an image thereon, wherein the power manager further comprises a reception module driver which controls driving of the digital broadcasting reception module and displays a mode selection window on the display part to select whether converting to the third power mode according to a selection through the mode selection part, and the power controller controls the power switch to make the digital broadcasting reception module convert its mode to the third power mode corresponding the selection through the mode selection window and the mode selection part.

According to an aspect of the present invention, the portable computer further comprises a mode selection part to select conversion to the second power mode or to the third power mode, wherein the power manager comprises a power controller which controls the power switch to make the digital broadcasting reception module to convert its mode from the first power mode to the second power mode if the conversion to the second power mode is selected through the mode selection part while the digital broadcasting reception module operates in the first power mode, and to convert its mode from the second power mode to the third power mode if the conversion to the third power mode is selected through the mode selection part while the digital broadcasting reception module operates in the second power mode. According to an aspect of the present invention, the portable computer further comprises a display part to display an image thereon, wherein the power manager further comprises a reception module driver which controls driving of the digital broadcasting reception module and displays a first mode selection window on the display part to select the conversion to the second power mode or to the third power mode according to a selection through the mode selection part, and the power controller controls the power switch to make the digital broadcasting reception module convert its mode to the second power mode or to the third power mode corresponding to the selection through the first mode selection window and the mode selection part.

According to an aspect of the present invention, the power controller controls the power switch to make the digital broadcasting reception module to convert its mode from the third power mode to the second power mode if the conversion to the second mode is selected through the mode selection part while the digital broadcasting reception module operates in the third power mode, and to convert its mode from the second power mode to the first power mode if the conversion to the first power mode is selected through the mode selection part while the digital broadcasting reception module operates in the second power mode.

According to an aspect of the present invention, the reception module driver displays a second mode selection window on the display part to select the conversion to the second power mode or to the first power mode according to the selection through the mode selection part, and the power controller controls the power switch to make the digital broadcasting reception module convert its mode to the second power mode or to the first power mode corresponding to the selection through the second mode selection window and the mode selection part.

According to an aspect of the present invention, the initializing routine performer enables data interface between the power controller and the digital broadcasting reception module if the mode of the digital broadcasting reception module is converted from the first power mode to the second power mode by the power controller, and disables the data interface between the power controller and the digital broadcasting reception module if the mode of the digital broadcasting module is converted from the second power mode to the first power mode by the power controller.

The foregoing and/or other aspects of the present invention are also achieved by providing a method of controlling a portable computer having a digital broadcasting reception module comprising a digital broadcasting receiving part to receive digital multimedia broadcasting signals and a digital broadcasting processor to process the digital multimedia broadcasting signals received through the digital broadcasting receiving part, and a power supply to supply power to drive the digital broadcasting receiving part and the digital broadcasting processor, the method comprising setting the digital broadcasting reception module as a first power mode in which power supplied from the power supply to the digital broadcasting receiving part and the digital broadcasting processor is cut off, while an initializing routine is performed to the portable computer; determining whether a predetermined first conversion condition is detected; converting the mode of the digital broadcasting reception module from the first power mode to a second power mode in which power supplied from the power supply to the digital broadcasting receiving part is cut off if the first conversion condition is detected; determining whether a predetermined second conversion condition is detected; and converting the mode of the digital broadcasting reception module from the second power mode to a third power mode in which power is supplied from the power supply to the digital broadcasting receiving part and the digital broadcasting processor if the second conversion condition is detected.

According to an aspect of the present invention, the determining whether the first conversion condition is detected comprises determining whether the power supply receives power from an adaptor.

According to an aspect of the present invention, the portable computer further comprises a mode selection part which outputs a mode conversion signal to select conversion to the second power mode or to the third power mode, wherein the determining whether the first conversion condition and/or the second conversion condition is detected comprises detecting whether the mode conversion signal is output from the mode selection part.

According to an aspect of the present invention, the method further comprises determining whether a predetermined third conversion condition is detected while the digital broadcasting reception module operates in the third power mode, converting the mode of the digital broadcasting reception module from the third power mode to the second power mode if the third conversion condition is detected; determining whether a predetermined fourth conversion condition is detected while the digital broadcasting reception module operates in the second power mode; and converting the mode of the digital broadcasting reception module from the second power mode to the first power mode if the fourth conversion condition is detected.

According to an aspect of the present invention, the portable computer further comprises a mode selection part which outputs a mode conversion signal to select conversion to the second power mode or to the first power mode, and the determining whether the third conversion condition and/or the fourth conversion condition is detected comprises detecting whether the mode conversion signal is output from the mode selection part.

According to an aspect of the present invention, the method further comprises enabling an interface between the digital broadcasting reception module and the portable computer when the mode of the digital broadcasting reception module is converted to the third power mode; and disabling the interface between the digital broadcasting reception module and the portable computer when the mode of the digital broadcasting reception module is converted to the first power mode.

The foregoing and/or other aspects of the present invention are also achieved by providing a portable computer, comprising a digital broadcasting reception module having a digital broadcasting receiving part to receive digital broadcasting signals and a digital broadcasting processor to process the digital broadcasting signals received through the digital broadcasting receiving part; a power supply which supplies power to drive the digital broadcasting receiving part and the digital broadcasting processor; and a system to control the digital broadcasting signal reception module to operate in one of a power saving mode in which power supplied from the power supply is cut off, and a driving mode in which power is supplied from the power supply.

According to an aspect of the present invention, the system comprises a power switch which controls power supplied from the power supply to the digital broadcasting reception module, and a power manager which controls the power switch to make the digital broadcasting reception module operate in one of the power saving mode and the driving mode.

According to an aspect of the present invention, the power manager comprises an initializing routine performer which performs an initializing routine to the portable computer and sets whether the digital broadcasting reception module operates in the power saving mode while the initializing routine is performed, and a power controller which controls the power switch to make the digital broadcasting reception module convert its mode from the power saving mode to the driving mode according to whether the conversion condition is detected.

According to an aspect of the present invention, the power supply receives power from a battery or an adaptor and supplies power to drive the digital broadcasting reception module, and the power controller determines that the conversion condition is detected if power is supplied from the adaptor to the power supply.

According to an aspect of the present invention, the portable computer further comprises a mode selection part to select conversion to the driving mode, wherein the power controller determines that the conversion condition is detected if the conversion to the driving mode is selected through the mode selection part.

Embodiments of the invention will now be described, by way of example, with reference to the accompanying drawings, in which:
Figure 1 is a block diagram of a portable device according to an embodiment of the present invention;
Figure 2 is a block diagram of a power control function of the portable device shown in Figure 1;
Figure 3 is a detailed block diagram of the portable device shown in Figure 1;
Figures 4A-4D illustrate examples of mode display windows of the portable device shown in Figures 1-3; and
Figures 5 and 6 are flowcharts of the portable device shown in Figures 1-3.

In this application, the term 'portable computer' or 'portable device' includes any apparatus which can be carried and provided with digital broadcast reception features. The term 'portable computer' or 'portable device' therefore includes, but is not limited to, devices, such as, mobile phones, PDAs, laptops and notebooks.

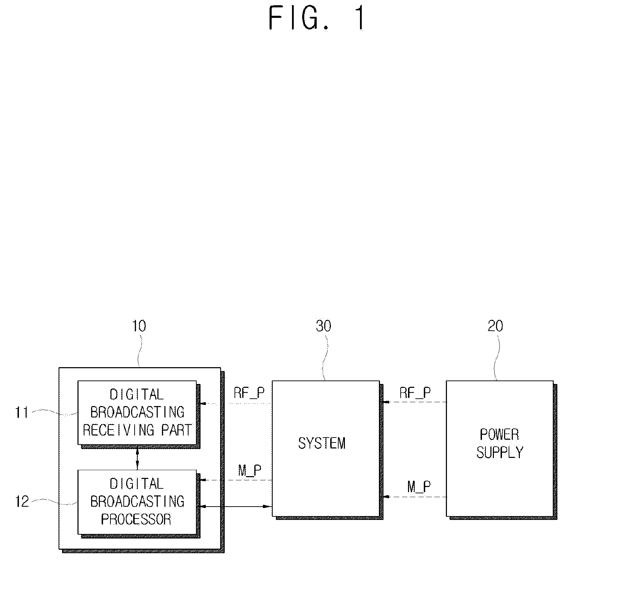

As shown in Figure 1, a portable device according to an embodiment of the present invention comprises a digital broadcast reception module 10, a power supply 20 and a power control system 30.

The digital broadcast reception module 10 comprises a digital broadcast receiving part 11 to receive a digital broadcast signal and a digital broadcast processor 12 to process the digital broadcast signal received through the digital broadcast receiving part 11.

The digital broadcasting receivable by the digital broadcast reception module includes digital multimedia broadcasting (DMB). One of digital video broadcasting (DVB) and vestigial sideband broadcasting (VSB) is used to transmit the digital broadcast signal. The digital broadcasting may be classified as radio broadcasting and multimedia broadcasting which are complementary to each other. The digital broadcasting may comprise at least one of terrestrial digital broadcasting and satellite digital broadcasting.

The digital broadcast receiving part 11 receives the digital broadcast signal. The digital broadcast receiving part 11 may comprise an antenna (not shown) to receive the digital broadcast signal; a tuner (not shown) to change the digital broadcast signal received through the antenna into a pass-band signal of a desired intermediate frequency; and an amplification circuit (not shown) to amplify the digital broadcast signal.

The digital broadcast processor 12 restores the digital broadcast signal received from the digital broadcast receiving part 11 into a signal recognizable by the system 30 and transmits the restored signal to the system 30. The digital broadcast processor 12 may comprise a satellite digital broadcast processor 12 to process a satellite digital broadcast signal; and a terrestrial digital broadcast processor 12 to process the terrestrial digital broadcast signal.

The power supply 20 supplies power to drive the digital broadcast reception module 10. The power supply 20 independently supplies power to drive the digital broadcast receiving part 11 and the digital broadcast processor 12 of the digital broadcast reception module 10. Hereinafter, power supplied from the power supply 20 to the digital broadcast receiving part 11 will be referred to as receiving part driving power RF_P, and power supplied to the digital broadcast processor 12 will be referred to as processor driving power M_P.

The system 30 receives the digital broadcast signal received and processed by the digital broadcast reception module 10 to output the received and processed signal as an image and/or a sound. The system 30 controls the digital broadcast reception module 10 to operate in one of a first power mode, a second power mode and a third power mode. That is, the digital broadcast reception module 10 may selectively operate in either the first, second or third power modes.

In the first power mode of the digital broadcast reception module 10, the receiving part driving power RF_P and the processor driving power M_P from the power supply 20 are cut off from being supplied to the digital broadcast receiving part 11 and the digital broadcast processor 12, respectively. In the second power mode of the digital broadcast reception module 10, the receiving part driving power RF_P supplied from the power supply 20 is cut off from being supplied to the digital broadcast receiving part 11, and the processor driving power M_P alone is supplied to the digital broadcast processor 12. In the third power mode of the digital broadcast reception module 10, the receiving part driving power RF_P and the processor driving power M_P from the power supply 20 are supplied to the digital broadcast receiving part 11 and the digital broadcast processor 12.

As described above, the system 30 controls the receiving part driving power RF_P and the processor driving power M_P supplied to the digital broadcast reception module 10 to make the digital broadcast reception module 10 operate in one of the first, second and third power modes, thereby controlling power consumed by the digital broadcast reception module 10.

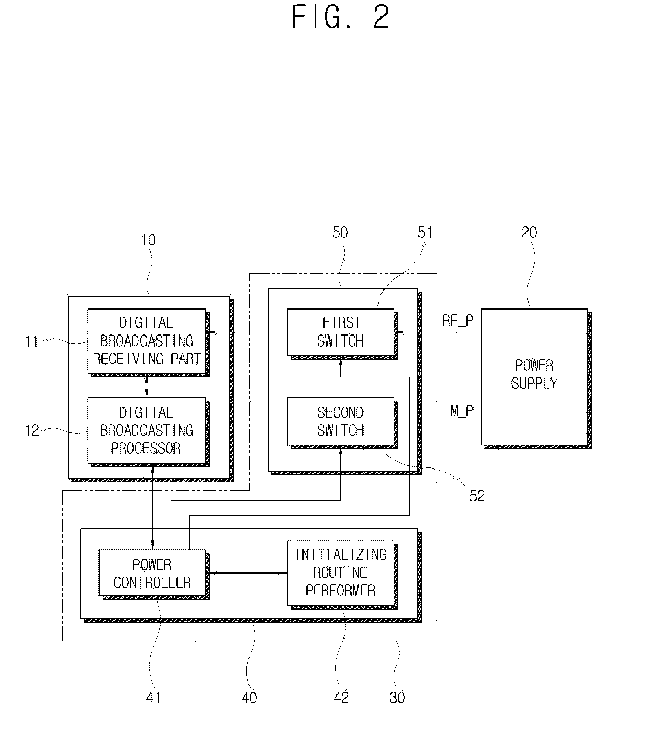

Referring to Figure 2, the system 30 may comprise a power switch 50 and a power manager 40. The power switch 50 controls the receiving part driving power RF_P and/or the processor driving power M_P supplied from the power supply 20 to the digital broadcast receiving part 11 and/or the digital broadcast processor 12, under the control of the power manager 40. The power switch 50 may comprise a first switch 51 to control the receiving part driving power RF_P supplied to the digital broadcast receiving part 11; and a second switch 52 to control the processor driving power M_P supplied to the digital broadcast processor 12.

The power manager 40 controls the first switch 51 and the second switch 52 of the power switch 50 to make the digital broadcast reception module 10 operate in one of the first power mode, the second power mode and the third power mode.

The power manager 40 may comprise a power controller 41 to control switching operation of the first switch 51 and the second switch 52; and an initializing routine performer 42.

The initializing routine performer 42 performs an initializing routine of the respective elements of the system 30 and the digital broadcast reception module 10 of the portable device when the portable device is turned on. The initializing routine performer 42 may comprise a basic input output system (BIOS) program to perform the initializing routine of the portable device, or may comprise other programs to perform the initializing routine of the portable device, regardless of their names.

Further, the initializing routine performer 42 may set whether the digital broadcast reception module 10 operates in the first power mode while the initializing routine is performed. For example, if the initializing routine performer 42 is provided as a BIOS program, a user may set whether the digital broadcast reception module 10 operates in the first power mode, in a BIOS setup state when initially booting the portable device.

Thus, the portable device may set whether the digital broadcast reception module 10 receives the receiving part driving power RF_P and the processor driving power M_P when initially booting. If a user does not use the digital broadcast reception module 10, the user may set the digital broadcast reception module 10 to operate in the first power mode, at the BIOS setup stage, thereby preventing power consumption of the digital broadcast reception module 10. If the user uses the digital broadcast reception module 10, the user may release the setting of the first power mode of the digital broadcast reception module 10 at the BIOS setup stage.

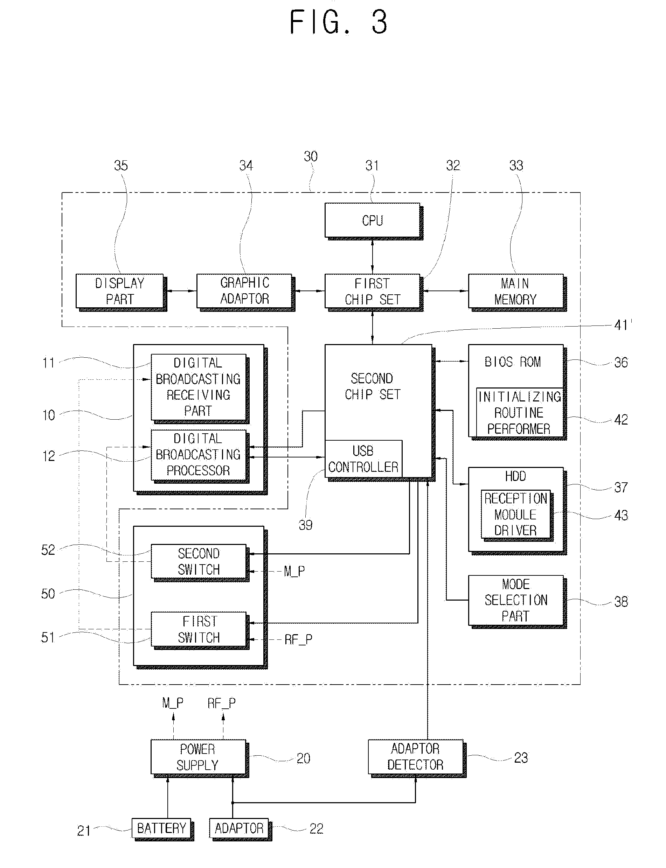

The portable device according to an embodiment of the present invention will be described in detail with reference to Figure 3. The system 30 may comprise a central processing unit (CPU) 31, a main memory 33, a graphic adaptor 34 which is connected to a display part 35 to transmit a video signal to the display part 35, a first chipset 32 and a second chipset 41'. The system 30 may comprise a BIOS ROM 36 and a hard disc drive 37 which exchange data through the second chipset 41'. The main memory 33 may be provided as a random access memory (RAM) which is a volatile memory.

The first chip set 32 manages data which travels between the CPU 31, the main memory 33 and the graphic adaptor 34. The first chip set 32 may be provided as a memory control hub or a north bridge. The first chip set 32 may be provided as a graphic memory control hub (GMCH) which is integrally provided with the graphic adaptor 34.

The second chip set 41' manages data which travels between the digital broadcast reception module 10, the BIOS ROM 36, and the hard disc drive 37. The second chip set 41' manages data which travels between various input and output devices connected to the portable device or installed therein. The second chip set 41' may be provided as an input/output control hub (ICH) or a south bridge.

A data interface between the second chip set 41' and the digital broadcast reception module 10 may comprise a universal serial bus (USB) interface which supports plug & play. Thus, a USB controller 39 may be mounted in the second chip set 41' to manage data exchanged by the USB interface with the digital broadcast reception module 10. Also, the USB controller 39 may be provided as an additional chip set distinguishable from the second chip set 41'.

The second chip set 41' may function as the power controller 41 in Figure 2 which controls the switching operation of the power switch 50. The initializing routine performer 42 in Figure 2 is stored in the BIOS ROM 36.

The second chip set 41' controls the power switch 50 to make the digital broadcast reception module 10 operate in one of the first power mode, the second power mode and the third power mode according to whether a first conversion condition, a second conversion condition, a third conversion condition and a fourth conversion condition, which are preset, are detected.

The first conversion condition is a condition to make the digital broadcast reception module 10 convert from the first power mode to the second power mode. The second conversion condition is a condition to make the digital broadcast reception module 10 convert from the second power mode to the third power mode. The third conversion condition is a condition to make the digital broadcast reception module 10 convert from the third power mode to the second power mode. The fourth conversion condition is a condition to make the digital broadcast reception module 10 to convert from the second power mode to the first power mode.

If the first conversion condition is detected while the digital broadcast reception module 10 operates in the first power mode, the second chip set 41' turns on the second switch 52 to supply the processor driving power M_P from the power supply 20 to the digital broadcast processor 12, and converts the mode of the digital broadcast reception module 10 from the first power mode to the second power mode.

The second chip set 41' may recognize a detection of power being supplied from an adaptor 22 to the power supply 20 as the detection of the first conversion condition. That is, if detected that power from the adaptor 22 is supplied to the power supply 20 in a state that the digital broadcast reception module 10 operates in the first power mode and power is supplied from the battery 21 to the power supply 20, the second chip set 41' converts the mode of the digital broadcast reception module 10 from the first power mode to the second power mode.

The portable device may further comprise an adaptor detector 23 to detect whether power is supplied from the adaptor 22 to the power supply 20. A detection result of the adaptor detector 23 is supplied to the second chip set 41', and the second chip set 41' determines whether the first conversion condition is detected, according to the detection result of the adaptor detector 23.

The initializing routine performer 42 may enable the USB controller 39 to manage the data interface between the second chip set 41' and the digital broadcast reception module 10 if it is detected that the mode of the digital broadcast reception module 10 is changed from the first power mode to the second power mode by the second chip set 41'. Accordingly, the second chip set 41' and the digital broadcast reception module 10 may communicate data with each other.

If the second conversion condition is detected while the digital broadcast reception module 10 operates in the second power mode, the second chip set 41' controls the power switch 50 to convert the mode of the digital broadcast reception module 10 from the second power mode to the third power mode. If the third conversion condition is detected while the digital broadcast reception module 10 operates in the third power mode, the second chip set 41' controls the power switch 50 to convert the mode of the digital broadcast reception module 10 from the third power mode to the second power mode. If the fourth conversion condition is detected while the digital broadcast reception module 10 operates in the second power mode, the second chip set 41' controls the power switch 50 to convert the mode of the digital broadcast reception module 10 from the second power mode to the first power mode.

If a user converts the digital broadcast reception module 10 to the third power mode, the second power mode or to the first power mode through a mode selection part 38 while the digital broadcast reception module 10 operates in the second or third power mode, the second chip set 41' may recognize that the second conversion condition, the third conversion condition or the fourth conversion condition is detected.

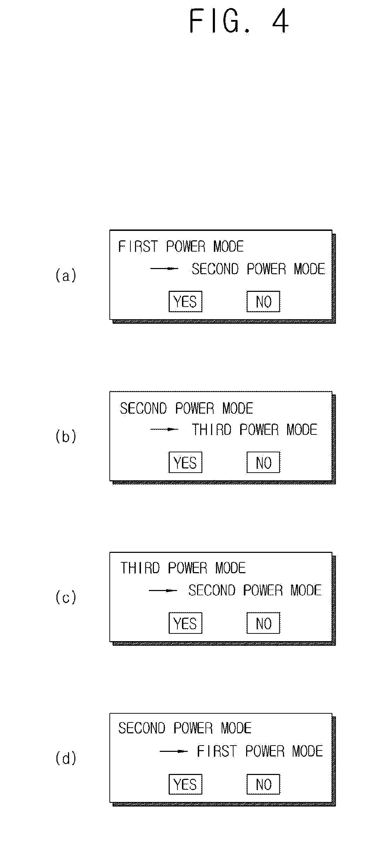

A reception module driver 43 may display a mode selection window on the display part 35 to convert the mode of the digital broadcast reception module 10 to the third power mode, the second power mode or the first power mode if the user controls the mode selection part 38. Figure 4A illustrates an example of the mode selection window to convert the mode of the digital broadcast reception module 10 from the first power mode to the second power mode. Figure 4B illustrates an example of the mode selection window to convert the mode of the digital broadcast reception module 10 from the second power mode to the third power mode.
Figure 4C illustrates an example of the mode selection window to convert the mode of the digital broadcast reception module 10 from the third power mode to the second power mode. Figure 4D illustrates an example of the mode selection window to convert the mode of the digital broadcast reception module 10 from the second power mode to the first power mode.

If the second conversion condition is detected, the second chip set 41' turns on the first switch 51 to supply the receiving part driving power RF_P from the power supply 20 to the digital broadcast receiving part 11, and converts the mode of the digital broadcast reception module 10 from the second power mode to the third power mode.

If the third conversion condition is detected, the second chip set 41' turns off the first switch 51 to cut off the receiving part driving power RF_P from the power supply 20 to the digital broadcast receiving part 11, and converts the mode of the digital broadcast reception module 10 from the third power mode to the second power mode.

If the fourth conversion condition is detected, the second chip set 41' turns off the second switch 52 to cut off the receiving part driving power RF_P from the power supply 20 to the digital broadcast receiving part 11, and converts the mode of the digital broadcast reception module 10 from the second power mode to the first power mode. At this time, the initializing routine performer 42 may disable the USB controller 39 which manages the data interface between the second chip set 41' and the digital broadcast reception module 10, if detected that the mode of the digital broadcast reception module 10 is converted from the second power mode to the first power mode by the second chip set 41'.

In the foregoing embodiment, the second chip set 41' recognizes whether the first conversion condition is detected, according to power supply from the adaptor 22. Also, the second chip set 41' may recognize that the first conversion condition is detected if the user converts the mode of the digital broadcast reception module 10 to the second power mode through the mode selection part 38 in a state that the digital broadcast reception module 10 operates in the first power mode.

If the user selects the conversion to the second power mode through the mode selection part 38, the reception module driver 43 may display the mode selection window (refer Figure 4A) on the display part 35 to select conversion to the second power mode. Then, the user may select the mode selection window to be displayed through the mode selection part 38 while the digital reception module 10 operates in the first power mode, and may select the conversion to the second power mode through the mode selection part 38 by using the mode selection window displayed on the display part 35 by the reception module driver 43.

In the foregoing embodiment, if detected that power is supplied from the adaptor 22, the second chip set 41' converts the mode of the digital broadcast reception module 10 from the first power mode to the second power mode. Also, if detected that power is supplied from the adaptor 22, the second chip set 41' may inform the reception module driver 43 that power is supplied from the adaptor 22. If the reception module driver 43 is informed of the detection of power being supplied from the second chip set 41', the reception module driver 43 may display the mode selection window (refer to Figure 4A) on the display part 35 to select conversion to the second power mode. The second chip set 41' converts the mode of the digital broadcast reception module 10 from the first power mode to the second power mode only when the user selects the conversion to the second power mode through the mode selection window.

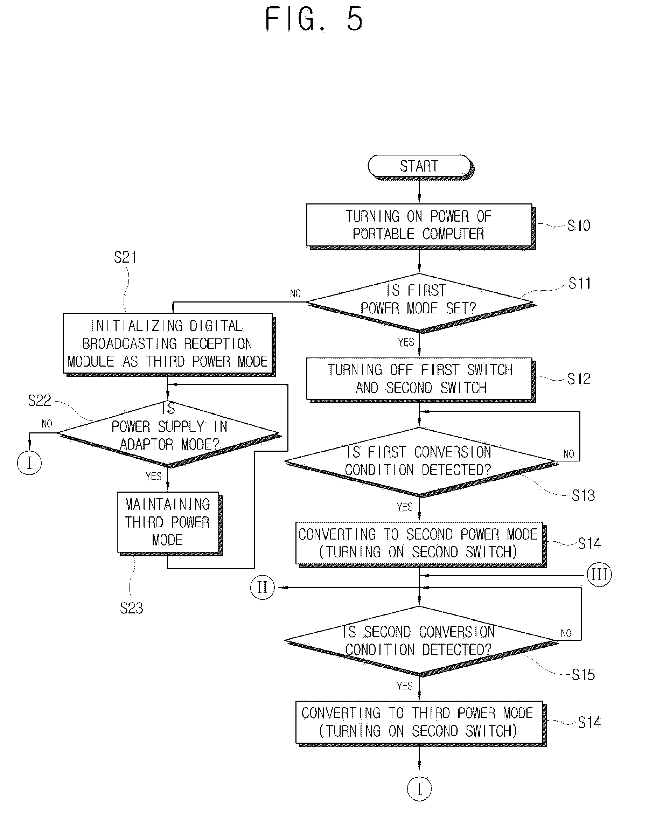

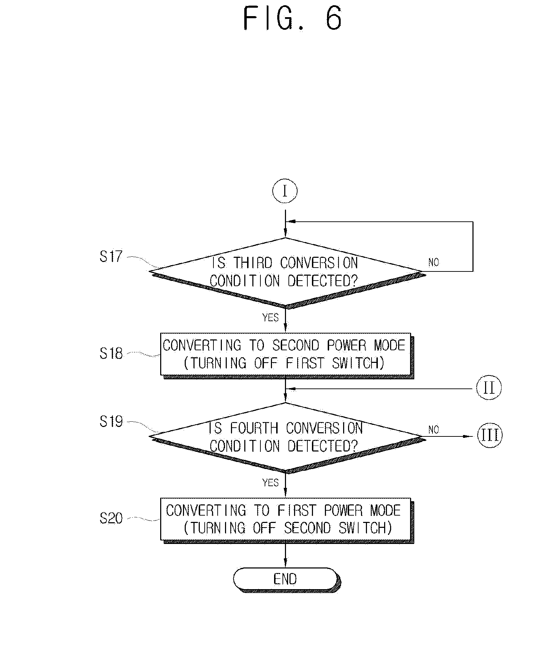

A method of controlling the portable device according to an embodiment of the present invention will be described with reference to Figures 5 and 6. The symbols I, II and III shown in Figures 5 and 6 indicate interconnections between operations shown in Figures 5 and 6.

First, if a user turns on power of the portable device at operation S10, the initializing routine performer 42 performs the initializing routine of the system 30 and the digital broadcast reception module 10. At this time, the initializing routine performer 42 checks whether the digital broadcast reception module 10 is set as the first power mode at operation S11, and informs the second chip set 41' if the digital broadcast reception module 10 is set as the first power mode. Accordingly, the second chip set 41' turns off the first switch 51 and the second switch 52 at operation S12, and controls the digital broadcast reception module 10 to be in the first power mode.

If the first conversion condition is detected at operation S13 while the digital broadcast reception module 10 operates in the first power mode, the second chip set 41' turns on the second switch 52 to convert the mode of the digital broadcast reception module 10 to the second power mode at operation S14. At this time, the second chip set 41' informs the detection of the first conversion condition to the initializing routine performer 42. The initializing routine performer 42 may enable the data interface between the digital broadcast reception module 10 and the second chip set 41'.

Then, the second chip set 41' determines whether the second conversion condition is detected while the digital broadcast reception module 10 operates in the second power mode, at operation S15. Also, the second chip set 41' may determine whether the fourth conversion condition is detected while the digital broadcast reception module 10 operates in the second power mode, at operation S19.

The second chip set 41' turns on the first switch 51 to convert the mode of the digital broadcast reception module 10 from the second power mode to the third power mode if the second conversion condition is detected while the digital broadcast reception module 10 operates in the second power mode, at operation S16.

The second chip set 41' turns on the second switch 51 to convert the mode of the digital broadcast reception module 10 from the second power mode to the first power mode if the fourth conversion condition is detected while the digital broadcast reception module 10 operates in the second power mode, at operation S20.

The second chip set 41' determines whether the third conversion condition is detected while the digital broadcast reception module 10 operates in the third power mode, at operation S17. The second chip set 41' turns off the first switch 51 to convert the mode of the digital broadcast reception module 10 from the third power mode to the second power mode if the third conversion condition is detected, at operation S18.

Returning to operation S11, if the first power mode is not set while the initializing routine of the portable device is performed by the initializing routine performer 42, the initializing routine performer 42 informs the second chip set 41'. Then, the second chip set 41' turns on the first switch 51 and the second switch 52 to make the digital broadcast reception module 10 operate in the third power mode, at operation S21.

When the digital broadcast reception module 10 is initialized to the third power mode at operation S21, the second chip set 41' determines whether the power supply 20 operates in an adaptor mode in which power is supplied from the adaptor 22, at operation S22. If the power supply 20 operates in the adaptor mode, the second chip set 41' controls the digital broadcast reception module 10 remain in the third power mode at operation S23. Conversely, if the power supply 20 does not operate in the adaptor mode, i.e., if power is supplied from the battery 21 to the power supply 20, the second chip set 41' performs operations S17 through S20 according to whether the third conversion condition is detected.

In the foregoing embodiment, the digital broadcast reception module 10 of the portable device operates in one of the first power mode, the second power mode and the third power mode. Also, the digital broadcast reception module 10 of the portable device according to the embodiment of the present invention may operate in one of the first power mode (which may also be referred to as a power saving mode) and the third power mode (which may also be referred to as a driving mode), omitting the second power mode.

The setting of the power saving mode corresponds to the setting of the first power mode. A conversion process from the power saving mode to the driving mode corresponds to the conversion process from the first power mode to the second power mode. Also, the conversion process from the driving mode to the power saving mode corresponds to the conversion process from the second power mode to the first power mode.

Although a few embodiments of the present invention have been shown and described, it would be appreciated by those skilled in the art that changes may be made in these embodiments without departing from the the scope of the invention as defined in the claims.

## Claims

1. A portable device, comprising:
a digital broadcast reception module (10) having a digital broadcast receiver (11) for receiving digital broadcast signals and a digital broadcast processor (12) for processing the digital broadcast signals received through the digital broadcast receiver;
a power supply (20) for supplying power to drive the digital broadcast receiver and the digital broadcast processor; and
a control system (30) for selectively supplying power to the digital broadcast receiver (11) and the digital broadcast processor (12).

2. A device according to claim 1, wherein the control system is operable to control the digital broadcast reception module (10) to operate in one of a first power mode in which power to the digital broadcast receiver and the digital broadcast processor is cut off, a second power mode in which power to the digital broadcast receiver is cut off, while power is supplied to the digital broadcast processor, and a third power mode in which power is supplied to the digital broadcast receiver and the digital broadcast processor.

3. A device according to claim 2, wherein the control system comprises:
a power switch (50) for switching the power supplied from the power supply to the digital broadcast receiver and/or the digital broadcast processor, and
a power manager (40) for controlling the power switch to make the digital broadcast reception module operate in one of the first power mode, the second power mode and the third power mode.

4. A device according to claim 3, wherein:
the power manager (40) comprises an initializing routine performer (42) for performing an initialisation routine and for setting whether the digital broadcast reception module operates in the first power mode while the initialisation routine is performed.

5. A device according to claim 4, wherein:
the power supply receives power from a battery or a mains adaptor and supplies the power to drive the digital broadcast reception module, and
the power manager comprises a power controller (41) which controls the power switch to convert the mode of the digital broadcast reception module from the first power mode to the second power mode if it is detected that the power supply receives power from the adaptor.

6. A device according to claim 5, further comprising:
a mode selection part for selecting whether the mode of the digital broadcast reception module is converted into the third power mode, wherein:
the power controller controls the power switch to make the digital broadcast reception module convert from the second power mode to the third power mode if the conversion to the third power mode is selected through the mode selection part.

7. A device according to any one of claims 3 to 6, further comprising:
a display part to display an image thereon, wherein:
the power manager further comprises a reception module driver which controls driving of the digital broadcast reception module and displays a mode selection window on the display part to select whether to convert to the third power mode according to a selection through the mode selection part, and
the power controller controls the power switch to make the digital broadcast reception module convert to the third power mode if the selection to convert is made through the mode selection window and the mode selection part.

8. A device according to any one of claims 3 to 5, further comprising:
a mode selection part to select conversion to the second power mode or to the third power mode, wherein:
the power manager comprises a power controller which controls the power switch to make the digital broadcast reception module to convert from the first power mode to the second power mode if the conversion to the second power mode is selected through the mode selection part while the digital broadcast reception module operates in the first power mode, and to convert from the second power mode to the third power mode if the conversion to the third power mode is selected through the mode selection part while the digital broadcast reception module operates in the second power mode.

9. A device according to claim 8, further comprising:
a display part to display an image thereon, wherein:
the power manager further comprises a reception module driver which controls driving of the digital broadcast reception module and displays a first mode selection window on the display part to select the conversion to the second power mode or to the third power mode according to a selection through the mode selection part, and
the power controller controls the power switch to make the digital broadcast reception module convert to the second power mode or to the third power mode corresponding to the selection through the first mode selection window and the mode selection part.

10. A device according to any one of claims 7 to 9, wherein:
the power controller controls the power switch to make the digital broadcast reception module to convert from the third power mode to the second power mode if the conversion to the second mode is selected through the mode selection part while the digital broadcast reception module operates in the third power mode, and to convert from the second power mode to the first power mode if the conversion to the first power mode is selected through the mode selection part while the digital broadcast reception module operates in the second power mode.

11. A device according to claim 10, wherein:
the reception module driver displays a second mode selection window on the display part to select the conversion to the second power mode or to the first power mode according to the selection through the mode selection part, and
the power controller controls the power switch to make the digital broadcast reception module convert to the second power mode or to the first power mode corresponding to the selection through the second mode selection window and the mode selection part.

12. A device according to any one of claims 3 to 11, wherein the initializing routine performer enables data interface between the power controller and the digital broadcast reception module if the mode of the digital broadcast reception module is converted from the first power mode to the second power mode by the power controller, and disables the data interface between the power controller and the digital broadcast reception module if the mode of the digital broadcast module is converted from the second power mode to the first power mode by the power controller.

13. A device according to any one of the preceding claims, wherein the control system is arranged to control the digital broadcast signal reception module to operate in one of a power saving mode in which the power supplied from the power supply is cut off, and a driving mode in which the power is supplied from the power supply.

14. A device according to claim 13, wherein the control system comprises a power switch which controls the power supplied from the power supply to the digital broadcast reception module, and a power manager which controls the power switch to make the digital broadcast reception module operate in one of the power saving mode and the driving mode.

15. A device according to claim 14, wherein the power manager comprises:
an initializing routine performer which performs an initializing routine to the portable device and sets whether the digital broadcast reception module operates in the power saving mode while the initializing routine is performed, and
a power controller which controls the power switch to make the digital broadcast reception module convert from the power saving mode to the driving mode according to whether the conversion condition is detected.

16. A device according to claim 14 or 15, wherein:
the power supply receives the power from a battery or a mains adaptor and supplies the power to drive the digital broadcast reception module, and
the power controller determines that the conversion condition is detected if the power is supplied from the adaptor to the power supply.

17. A device according to claim 16, further comprising:
a mode selection part to select conversion to the driving mode, wherein:
the power controller determines that the conversion condition is detected if the conversion to the driving mode is selected through the mode selection part.

18. A device according to claim 16 or 17, further comprising:
an adaptor detector to detect whether the power is supplied from the adaptor to the
power supply.

19. A portable device, comprising:
a digital broadcast receiver to receive digital broadcast signals;
a digital broadcast processor to process the digital broadcast signals;
a power supply supplying power to drive the digital broadcast receiver and the digital broadcast processor, the power supply operable from a battery or an adaptor; and
a controller controlling the drive power to the digital broadcast receiver and the digital broadcast processor; and
a user programmable initializing routine performer which determines whether the controller initially supplies the power to the digital broadcast receiver and the digital broadcast processor during a boot-up operation of the portable device.

20. A device according to claim 19, wherein where the user programmable initializing routine performer determines the controller to initially supply the power to the digital broadcast receiver and the digital broadcast processor during the boot-up operation and the power is not being supplied by the adaptor, the controller turns off the power to the digital broadcast receiver.

21. A device according to claim 19, wherein where the user programmable initializing routine performer determines the controller not to initially supply the power to the digital broadcast receiver and the digital broadcast processor during the boot-up operation and the power is being supplied by the adaptor, the controller maintains power off to the digital broadcast receiver and the digital broadcast processor.

22. A device according to claim 19, further comprising:
a selector operable by a user, wherein:
where the user programmable initializing routine performer determines the controller to initially supply the power to the digital broadcast receiver and the digital broadcast processor during the boot-up operation, and power being supplied by the adaptor is removed after the boot-up operation, the controller requests the user to select whether to continue supplying the power to the one or both of the digital broadcast receiver and the digital broadcast processor using the user operable selector.

23. A device according to claim 19, further comprising:
a selector operable by a user and permitting the user to selectively control the supply of power to the digital broadcast receiver and the digital broadcast processor independently of the supply of power determined by the user programmable initializing routine performer.

24. A portable device, comprising:
a port through which a digital broadcast module may be removably connected, the digital broadcast module comprising a digital broadcast receiver and a digital broadcast processor to process the digital broadcast signals;
a power supply supplying power from a battery or from an adaptor; and
a controller controlling the power supplied to the port to selectively drive at least one of the digital broadcast receiver and the digital broadcast processor, wherein the controller determines whether the power is initially supplied to the port during a boot-up operation of the portable device based on a user selectable preference, whether the digital broadcast module is connected to the port, and whether the power is being supplied to the port from the battery or from the adaptor.

25. A method of controlling a portable device having a digital broadcast reception module comprising a digital broadcast receiving part to receive digital multimedia broadcast signals and a digital broadcast processor to process the digital multimedia broadcast signals received through the digital broadcast receiving part, and a power supply to supply power to drive the digital broadcast receiving part and the digital broadcast processor, the method comprising:
setting the digital broadcast reception module to a first power mode in which power supplied from the power supply to the digital broadcast receiving part and the digital broadcast processor is cut off, while performing an initializing routine to the portable device;
determining whether a predetermined first conversion condition is detected;
converting the mode of the digital broadcast reception module from the first power mode to a second power mode in which the power supplied from the power supply to the digital broadcast receiving part is cut off if the first conversion condition is detected;
determining whether a predetermined second conversion condition is detected; and
converting the mode of the digital broadcast reception module from the second power mode to a third power mode in which the power is supplied from the power supply to the digital broadcast receiving part and the digital broadcast processor if the second conversion condition is detected.

26. A method according to claim 25, wherein the determining of whether the first conversion condition is detected comprises determining whether the power supply receives power from an adaptor.

27. A method according to claim 25, further comprising:
generating a mode conversion signal to select conversion to the second power mode or to the third power mode, wherein:
the determining whether the first conversion condition or the second conversion condition is detected comprises detecting whether the mode conversion signal is output from the mode selection part.

28. A method according to claim 25, further comprising:
determining whether a predetermined third conversion condition is detected while the digital broadcast reception module operates in the third power mode, converting the mode of the digital broadcast reception module from the third power mode to the second power mode if the third conversion condition is detected; determining whether a predetermined fourth conversion condition is detected while the digital broadcast reception module operates in the second power mode; and converting the mode of the digital broadcast reception module from the second power mode to the first power mode if the fourth conversion condition is detected.

29. A method according to claim 28, further comprising:
generating a mode conversion signal to select conversion to the second power mode or to the first power mode, wherein:
the determining of whether the third conversion condition or the fourth conversion condition is detected comprises detecting whether the mode conversion signal is output from the mode selection part.

30. A method according to claim 25, further comprising:
enabling an interface between the digital broadcast reception module and other portions of the portable device when the mode of the digital broadcast reception module is converted to the third power mode; and
disabling the interface between the digital broadcast reception module and the other portions of the portable device when the mode of the digital broadcast reception module is converted to the first power mode.
